# EUROPÄISCHE PATENTANMELDUNG

(11) **EP 0 839 979 A2**
(43) Veröffentlichungstag der Anmeldung: **06.05.1998**
(21) Anmeldenummer: 97118685.3
(22) Anmeldetag: 28.10.1997
(51) Int. Cl.: E05F 11/48, E05F 15/16, B60J 1/17

(54) **Seilzug-Fensterheber**

(30) Priorität: 30.10.1996 DE 19643867; 07.02.1997 DE 19704593
(71) Anmelder: KÜSTER & Co. GmbH, 35630 Ehringshausen (DE)
(72) Erfinder: Marscholl, Klaus, 35630 Ehringshausen-Breitenbach (DE); Burk, Jochen, 35075 Gladenbach (DE)
(74) Vertreter: Müller, Eckhard, Dr.

(57) **Zusammenfassung**

Es wird ein Seilzug-Fensterheber zum Anheben und Absenken einer Scheibe (3) eines Kraftfahrzeuges mit einer vorderen Schiene (2) und einer hinteren Schiene (1) beschrieben, wobei die Schienen (1, 2) in der Tür, Seitenwand o. dgl. eines Kraftfahrzeuges befestigt sind. Desweiteren sind zwei jeweils an einer der Schienen (1, 2) geführte, mit der Scheibe (3) verbundenen Mitnehmern (4, 5) vorgesehen, wobei mittels eines an Umlenkrollen (9) der Schienen (1, 2) über Kreuz geführten Seilzuges (6), der mit den Mitnehmern (4, 5) verbunden ist, mittels eines Antriebes (7) ein Anheben und Absenken der Scheibe durchführbar ist. Zur Vermeidung von Klappergeräuschen der abgesenkten Scheibe ist im Bereich der vorderen Schiene (2) des Seilzug-Fensterhebers eine stationäre Scheibenhalterung oder -führung (11) angeordnet, die einen Abschnitt einer vorderen Kante (12) der abgesenkten Scheibe (3) umfaßt oder übergreift.

## Beschreibung

Die Erfindung betrifft einen Seilzug-Fensterheber zum Anheben und Absenken einer Scheibe eines Kraftfahrzeuges mit einer vorderen Schiene und einer hinteren Schiene, die in der Tür, einer Seitenwand o. dgl. des Kraftfahrzeuges befestigt sind, mit zwei jeweils an einer der Schienen geführten, mit der Scheibe verbundenen Mitnehmern und mit einem an Umlenkrollen der Schienen über Kreuz geführten Seilzug, der mit den Mitnehmern verbunden und mittels eines Antriebes zum Anheben und Absenken der Scheibe betätigbar ist.

Derartige Seilzug-Fensterheber sind bereits bekannt. Allerdings besteht bei Fahrzeugen mit einer schräg nach vorne zulaufenden Seitenscheibe das Problem, daS die abgesenkte Scheibe bei einem öffnen und Schließen der Fahrzeugtür oder bei unebener Fahrbahn aufgrund der mangelnden vorderen Führung zu Klappergeräuschen neigt. Dieser Umstand könnte zwar dadurch beseitigt werden, daß die Scheibe in der abgesenkten bzw. geöffneten Stellung zusätzlich an ihrer in Fahrzeugrichtung vorderen Kante mittels einer zusätzlichen Schiene, sozusagen als Verlängerung der Scheibenführung geführt wird. Nachteilig bei einer derartigen Lösung erweist sich jedoch der Einsatz einer zusätzlichen Schiene bzw. Führung, die gerade durch den Einsatz eines Zweischienen-Seilzug-Fensterhebers vermieden werden soll.

Demgegenüber liegt der Erfindung die Aufgabe zugrunde, einen Seilzug-Fensterheber der eingangs genannten Art dahingehend weiterzubilden, daS auf konstruktiv unaufwendige Art ein Klappern der abgesenkten, insbesondere schräg nach vorne zulaufenden Seitenscheibe vermieden wird.

Diese Aufgabe wird bei dem Seilzug-Fensterheber mit den eingangs genannten Merkmalen i. w. dadurch gelöst, daß im Bereich der vorderen Schiene des Seilzug-Fensterhebers eine stationäre Scheibenhalterung oder -führung angeordnet ist, die einen Abschnitt einer vorderen Kante der abgesenkten Scheibe umfaßt oder übergreift. Durch diese Maßnahme wird eine konstruktiv einfache bzw. unaufwendige Halterung bzw. Führung der abgesenkten Scheibe bzw. des geöffneten Fensters gewährleistet, so daß Klappergeräusche sicher vermieden werden.

Nach einer ersten vorteilhaften Weiterbildung der Erfindung weist die Scheibenhalterung einen i. w. U-profilartigen Bereich auf, der die vordere Kante der abgesenkten Scheibe bügelförmig übergreift. Aufgrund dieser Maßnahme ist die abgesenkte Scheibe bzw. das geöffnete Fenster sicher in der Tür, Seitenwand o. dgl. des Kraftfahrzeuges geführt oder gehaltert, so daß ein Anschlagen der Scheibe gegen Bauteile des Seilzug-Fensterhebers oder der Tür bzw. Seitenwand des Kraftfahrzeuges mit der damit verbundenen Geräuschentwicklung, insbesondere beim Öffnen und Schließen der Fahrzeugtür, weitestgehend vermieden ist.

Dabei hat es sich als zweckmäßig erwiesen, daß die Scheibenhalterung im Haltebereich ein Dämpfungselement, wie einen Gummidämpfer o. dgl. aufweist oder mit dem Dämpfungsmaterial ausgekleidet ist. Mit dieser Maßnahme wird der Entstehung eines Klappergeräusches aufgrund eines Anschlagens der Scheibe an der Scheibenhalterung entgegengewirkt sowie eine mögliche Beschädigung der Scheibe vermieden.

Dabei hat es sich als vorteilhaft erwiesen, daß die Scheibenhalterung eine Einführungsschräge für den i. w. U-profilartigen Bereich aufweist. Aufgrund dieser Maßnahme wird die Scheibe bei dem Absenken trotz eines möglicherweise vorhandenen, geringen seitlichen Versatzes exakt in den U-profilartigen Bereich der Scheibenhalterung eingeführt und sicher gehalten bzw. geführt. Die Einführschräge kann insbesondere als nach oben weisende trichterförmige Erweiterung ausgebildet sein.

Dabei hat es sich als vorteilhaft erwiesen, daß die Scheibenhalterung unmittelbar einstückig an der vorderen Führungsschiene oder insbesondere mittels Schweißen, Schrauben, Druckfügen o. dgl. an der Führungsschiene befestigt ist.

Es besteht jedoch auch die Möglichkeit, daß die Scheibenhalterung mit dem insbesondere elektrischen Antrieb verbunden ist.

Der Antrieb ist dabei von Vorteil an der vorderen Schiene befestigt.

Die Verbindung der Scheibenhalterung mittelbar oder unmittelbar mit der vorderen Führungsschiene hat den Vorteil, daß die Scheibenhalterung bei der Montage des Fensterhebers bereits entsprechend bzgl. der Führungsschiene ausgerichtet ist und eine separate Justage der Scheibenhalterung entfallen kann.

Weitere Ziele, Vorteile, Merkmale und Anwendungsmöglichkeiten der vorliegenden Erfindung ergeben sich aus der nachfolgenden Beschreibung des Ausführungsbeispieles anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:

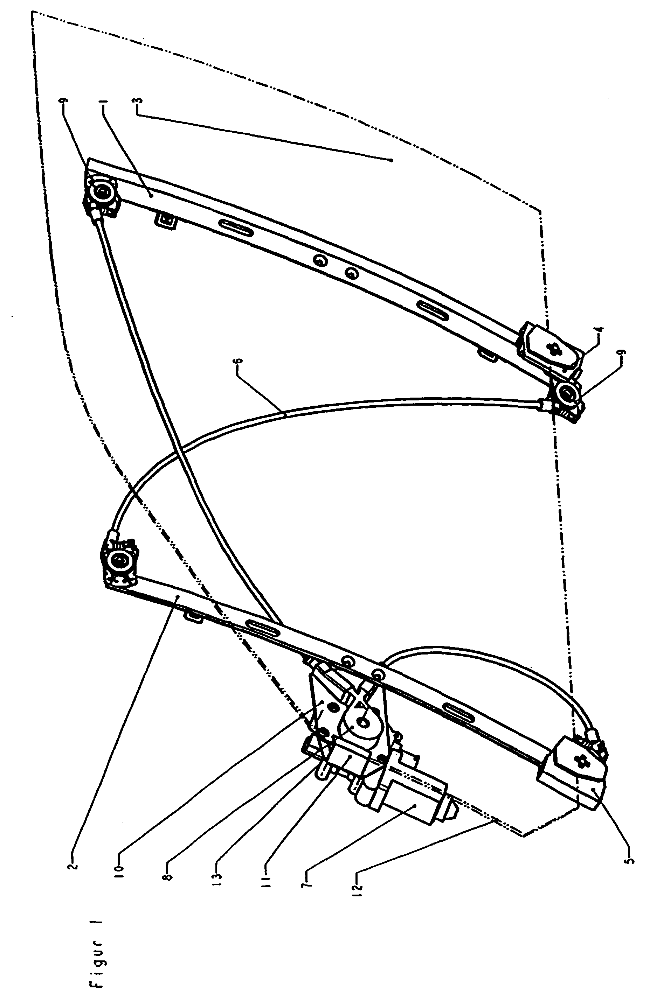

- Figur 1: eine mögliche Ausführungsform eines Zweischienen-Seilzug-Fensterhebers mit an der vorderen Schiene angeordneten Scheibenabstützung und

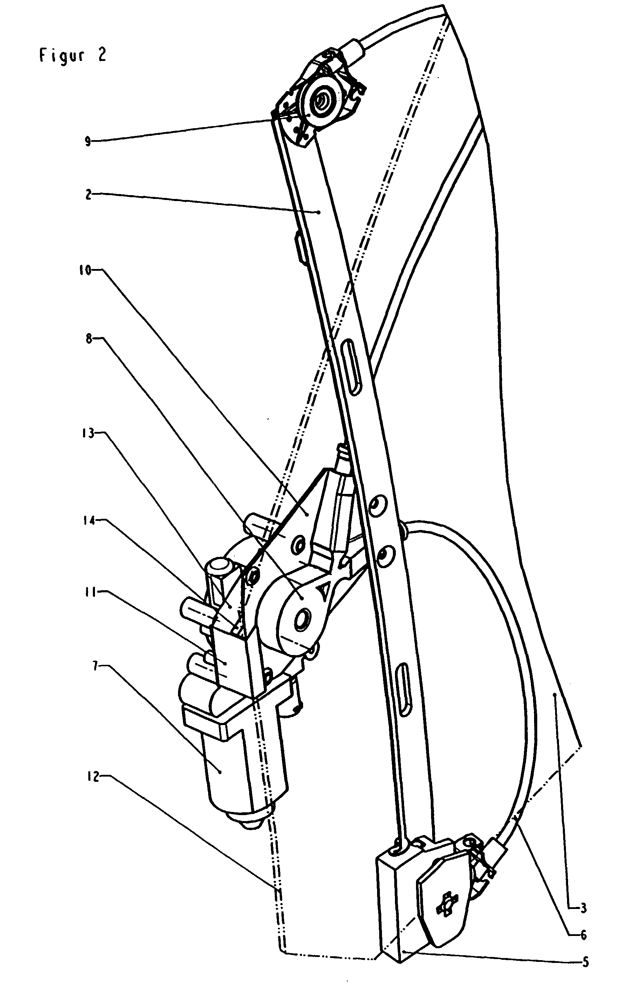

- Figur 2: eine Detaillzeichnung von Figur 1.

Der Seilzug-Fensterheber gemäß den Figuren weist zwei Schienen 1, 2 auf, an welchen jeweils ein mit der Scheibe 3 verbindbarer Mitnehmer 4, 5 geführt ist. Die Mitnehmer 4, 5 sind mit einem über Kreuz geführten Seilzug 6 verbunden. Der Seilzug 6 wird bei dem hier gewählten Ausführungsbeispiel über einen elektrischen Antrieb 7 bspw. auf eine Seiltrommel 8 in einem Seiltrommelgehäuse 8 aufgewickelt, wodurch die längs den Schienen 1, 2 verlaufenden Abschnitte des Seilzuges 6 und damit die mit dem Seilzug 6 verbundenen Mitnehmer 4, 5 für eine Öffnungs- und Schließbewegung der Scheibe 3 auf und ab bewegt werden.

Selbstverständlich ist es auch möglich, anstelle eines elektrischen Antriebes 7 einen manuellen Betätigung des Fensterhebers vorzusehen.

Die Führung des Seilzuges 6 erfolgt über Umlenkrollen 9, welche an den Enden der Schienen 1, 2 angeordnet sind.

Insbesondere bei Fahrzeugen mit einer schräg nach vorne, d.h. in Vorwärtsrichtung des Fahrzeuges zulaufenden Seitenscheibe 3 ist es erforderlich, daß diese in geöffneter Stellung zusätzlich an ihrer vorderen Kante geführt wird, um bei Zuschlagen der Fahrzeugtür mit geöffneter Seitenscheibe Klappergeräusche zu verhindern. Hierzu ist vorgesehen, daß an dem mit der vorderen Schiene 2 verbundenen Gehäuse 10 des Antriebes 7 für den Seilzug 6 ein Scheibenhalterung bzw. - führung 11 angeordnet ist, welche bei geöffneter Seitenscheibe eine Halterung bzw. Führung der vorderen Kante 12 der Seitenscheibe 3 bewirkt. Hierdurch sind Klappergeräusche, bspw. beim Öffnen und Schließen der Fahrzeugtür mit geöffneter Seitenscheibe 3 vermieden.

Selbstverständlich ist es auch möglich, die Scheibenhalterung bzw. -führung 11 unmittelbar an der vorderen Führungsschiene 2 festzulegen. Die Verbindung der Scheibenhalterung 11 mittelbar oder unmittelbar mit der Führungsschiene 2 hat den Vorteil, daß die Scheibenhalterung 11 bei der Montage des Fensterhebers bereits entsprechend auf die Führungsschiene 2 ausgerichtet ist und eine separate Justage der Scheibenhalterung 11 entfällt.

Ggf. kann die Scheibenhalterung 11 mit einem Dämpfungsbelag ausgelegt sein, um auch insoweit Klappergeräuschen oder ggf. einer Beschädigung der Scheibe 3 entgegenzuwirken.

Selbstverständlich ist es auch möglich, die Scheibenhalterung unmittelbar an der Schiene 2 festzulegen und dann den Antrieb 7 mit Seiltrommelgehäuse 8 spiegelbildlich zur Führungsschiene 2 anzuordnen.

Die Scheibenhalterung 11 selbst einen i. w. U-profilartigen Bereich 13 auf, der die vordere Kante 12 der abgesenkten Scheibe 3 bügelförmig übergreift. An der Scheibenhalterung 11 ist seitlich des U-profilartigen Bereichs 13 eine Einführschräge 14 vorgesehen, um Positionstoleranzen der vordere Kante 12 der Scheibe 3 bzgl. der Scheibenhalterung 11 beim Absenken der Scheibe 3 selbsttätig auszugleichen. Die Einführschräge 14 sorgt insbesondere für einen Toleranzausgleich in der Positionierung der Scheibe quer zu der Fahrtrichtung. Dabei ist die Scheibenhalterung 11 bevorzugt einstückiger Bestandteil des Gehäuses 10. Weiterhin kann der Antrieb 7 zusätzlich durch Befestigungsmittel mit der Tür verbunden sein, so daß die Scheibenhalterung 11 äußerst stabil gehalten ist. Die beschriebene Scheibenführung kann gleichermaßen sowohl bei innenliegenden, also zwischen Türinnenblech und Scheibe, als auch bei außenliegenden, also zwischen Türaußenblech und Scheibe, Fensterscheibe von Vorteil eingesetzt werden.

### Bezugszeichenliste

- 1: - Schiene
- 2: - Schiene
- 3: - Scheibe
- 4: - Mitnehmer
- 5: - Mitnehmer
- 6: - Seilzug
- 7: - Antrieb
- 8: - Seiltrommelgehäuse
- 9: - Umlenkrollen
- 10: - Gehäuse
- 11: - Scheibenhalterung
- 12: - vordere Kante
- 13: - U-profilartiger Bereich
- 14: - Einführschräge

## Patentansprüche

1. Seilzug-Fensterheber zum Anheben und Absenken einer Scheibe (3) eines Kraftfahrzeuges mit einer vorderen Schiene (2) und einer hinteren Schiene (1), die in der Tür, einer Seitenwand o. dgl. des Kraftfahrzeuges befestigt sind, mit zwei jeweils an einer der Schienen (1, 2) geführten, mit der Scheibe (3) verbundenen Mitnehmern (4, 5) und mit einem an Umlenkrollen (9) der Schienen (1, 2) insbesondere über Kreuz geführten Seilzug (6), der mit den Mitnehmern (4, 5) verbunden und mittels eines Antriebes (7) zum Anheben und Absenken der Scheibe betätigbar ist, dadurch gekennzeichnet, daß im Bereich der vorderen Schiene (2) des Seilzug-Fensterhebers eine stationäre Scheibenhalterung oder -führung (11) angeordnet ist, die einen Abschnitt einer vorderen Kante (12) der abgesenkten Scheibe (3) umfaßt oder übergreift.

2. Seilzug-Fensterheber nach Anspruch 1, dadurch gekennzeichnet, daß die Scheibenhalterung (11) einen i. w. U-profilartigen Bereich (13) aufweist, der die vordere Kante (12) der abgesenkten Scheibe (3) bügelförmig übergreift.

3. Seilzug-Fensterheber nach einem der vorhergehenden Ansprüche, dadurch gekennzeichnet, daß die Scheibenhalterung (11) im Haltebereich ein Dämpfungselement, wie einen Gummidämpfer o. dgl. aufweist oder mit Dämpfungsmaterial ausgekleidet ist.

4. Seilzug-Fensterheber nach einem der vorhergehenden Ansprüche, dadurch gekennzeichnet, daß die Scheibenhalterung (11) eine Einführungsschräge (14) für den i. w. U-profilartigen Bereich (13) aufweist.

5. Seilzug-Fensterheber nach einem der vorhergehenden Ansprüche, dadurch gekennzeichnet, daß die Scheibenhalterung (11) unmittelbar einstückig an der vorderen Führungsschiene (2) oder insbesondere mittels Schweißen, Schrauben, Druckfügen o. dgl. an der Führungsschiene (2) befestigt ist.

6. Seilzug-Fensterheber nach einem der vorhergehenden Ansprüche, dadurch gekennzeichnet, daß die Scheibenhalterung (11) mit dem insbesondere elektrischen Antrieb (7) verbunden ist.

7. Seilzug-Fensterheber nach Anspruch 7, dadurch gekennzeichnet, daß der Antrieb (7) an der vorderen Schiene (2) befestigt ist.
